# EUROPEAN PATENT APPLICATION

(11) **EP 2 216 621 A1**
(43) Date of publication of application: **11.08.2010**
(21) Application number: 09180296.7
(22) Date of filing: 22.12.2009
(51) Int. Cl.: G01B 11/24, G01B 11/06, G01B 11/30

(54) **Lightwave interference measurement device**

(30) Priority: 09.02.2009 JP 2009027168; 31.03.2009 JP 2009087543; 11.09.2009 JP 2009210942
(71) Applicant: Fujinon Corporation, Saitama (JP)
(72) Inventor: Ge, Zongtao, Saitama-shi Saitama (JP)
(74) Representative: Klunker . Schmitt-Nilson . Hirsch

(57) **Abstract**

A test surface is rotatable around a rotation axis and an interferometer main unit is movable with respect to a test surface so that an observation area is moved on the test surface which is rotating. While the observation area is moved within the test surface, an interfering light beam is successively captured by a one-dimensional image sensor, straight belt form observation-position-specific interference fringes formed by the interfering light beam are successively imaged, and the shape information of the test surface is obtained based on the imaged observation-position-specific interference fringes.

## Description

The present application claims priority from Japanese Patent Application No. 2009-027168 filed on February 9, 2009, Japanese Patent Application No. 2009-087543 filed on March 31, 2009, and Japanese Patent Application No. 2009-210942 filed on September 11, 2009, the entire content of which is incorporated herein by reference.

### BACKGROUND OF INVENTION

### Field of the Invention

The present invention relates to a lightwave interference measurement device that applies a measurement light beam to a test surface and measures the shape of the test surface based on the interference fringes obtained by the interference between the reflected light beam from the observation area of the test surface and a reference light beam, and more particularly, to a lightwave interference measurement device suitable for the measurement of the shape of a large-size plane test surface and the measurement of the shapes of two test surfaces parallel to each other and possessed by a large-size plane-parallel test object.

### Description of the Related Art

A lightwave interference measurement device (interferometer) which is capable of measuring the shape of a test surface on the order of light wavelengths is widely used for the measurement of the shapes of optical elements and the like requiring extremely high surface accuracy. However, since the manufacturing cost of the device significantly increases as the numerical aperture of the optical system increases, in general-purpose devices, the range that can be measured by one measurement is considered approximately 60 to 80 mm in diameter.

For this reason, when the shape of a large-size test surface having a diameter of more than 300 mm is measured, measurement of the entire area of the test surface is performed by using a technique called synthetic aperture method. According to this technique, the test surface is divided into a plurality of partial areas with diameters of 60 to 80 mm, measurement is performed for each of these small areas, the measurement result for each area is data-processed, and then, the measurement results are joined together to thereby obtain the general shape of the test surface. Various synthetic aperture methods have been proposed according to the difference in the shape of the test surface and the data processing method (see JP-A-2002-162214, JP-A-08-219737, and JP-A-10-332350 shown below).

### SUMMARY OF INVENTION

In recent years, it has been demanded that the general shape of a large-size plane test surface having a diameter of more than 300 mm (hereinafter, sometimes referred to as "large-size test plane) be measured with high accuracy in a short time.

In the lightwave interference measurement by the related synthetic aperture method, when the shape of such a large-size test plane is measured, the following is necessary: The position of the test surface with respect to the interfering optical system is relatively moved in succession so that the position corresponds to each of a plurality of partial areas set on the test surface, and the interference fringes are imaged under a condition where the test surface is stopped with respect to the interfering optical system every movement. For this reason, a great deal of time is required to complete the measurement of the entire area of a large-size test plane.

When fringe scan measurement is performed to obtain a more accurate measurement result, it is necessary to adjust the optical path lengths of the reference light beam and the object light beam and the wavelength of the measurement light beam for each of the plurality of partial areas and perform a fringe scan measurement every adjustment, and adjustment errors caused at that time are a significant factor of measurement errors. Since it is extremely difficult to completely avoid adjustment errors, to reduce measurement errors, it is vital to reduce the number of times of fringe scan measurement. However, in the lightwave interference measurement by the related synthetic aperture method, since it is necessary that approximately ten to thirty partial areas be set to cover the entire area of the test surface, it is difficult to reduce the number of times of fringe scan measurement that is necessarily performed for each partial area, so that it is difficult to ensure measurement accuracy.

Moreover, in recent years, it has been demanded that the shape of each of two test surfaces parallel to each other, having a diameter of more than 300 mm and possessed by a plane-parallel test object (hereinafter, one test surface will be referred to as a first test surface, and the other test surface, as a second test surface) be measured in a short time.

According to the related lightwave interference measurement, when the shapes of such two test surfaces are measured, the following is necessary: First, the position of the interfering optical system with respect to the first test surface is relatively moved in succession so that the position corresponds to each of a plurality of partial areas set on the first test surface, the interference fringes for each position of movement are imaged under a condition where the test surface is stopped with respect to the interfering optical system every movement, and then, for the second test surface, the interference fringes are imaged by similar procedures. For this reason, a great deal of time is required to complete the measurement of the shapes of the two test surfaces of a test object.

The present invention is made in view of such circumstances, and a first object thereof is to provide a lightwave interference measurement device capable of measuring the shape of a large-size plane test surface with high accuracy in a short time, and a second object thereof is to provide a lightwave interference measuring device capable of measuring the shapes of two test surfaces of a plane-parallel test object in a short time.

To attain the above-mentioned object, a lightwave interference measuring device of the present invention is structured as follows:
According to a first aspect of the invention, a lightwave interference measurement device that measures a shape of a plane test surface, the device comprises: a test surface rotation unit for rotating the test surface around a rotation axis that is set vertically to the test surface;
a interfering optical system that applies a measurement light beam to the test surface which is rotating, and combines a reflected light beam from an observation area within the test surface with a reference light beam to obtain an interfering light beam; an observation position adjustment unit for successively changing a relative position of the test surface with respect to the measurement light beam applied to the test surface so that the observation area is successively moved over an entire area within the test surface that is rotating; an interference fringe imaging system that successively captures the interfering light beam by a one-dimensional image sensor and successively images straight belt form observation-position-specific interference fringes formed by the interfering light beam while the observation area is moved within the test surface; and a shape analysis unit for obtaining shape information of the test surface based on the imaged observation-position-specific interference fringes.

According to a second aspect of the invention, the observation position adjustment unit changes the relative position so that the observation area is successively moved for each of a plurality of orbicular areas into which the test surface is orbicularly divided with respect to a position where the rotation axis is set, the interference fringe imaging system images the observation-position-specific interference fringes for each of a plurality of rotation positions of the test surface in each of the plurality of orbicular areas, and the shape analysis unit generates orbicular-area-specific interference fringes corresponding to each of the plurality of orbicular areas based on the imaged observation-position-specific interference fringes, and obtains the shape information of the test surface based on the orbicular-area-specific interference fringes.

According to a third aspect of the invention, the test surface includes a first test surface and a second test surface parallel to each other and possessed by a plane-parallel test object, the test surface rotation unit rotates the test surface around a rotation axis that is set vertically to the first test surface and the second test surface; the interfering optical system includes: a first interfering optical system that applies a first test surface measurement light beam to the first test surface which is rotating, and combines a reflected light beam from a first observation area within a first test surface with a first test surface reference light beam to obtain a first test surface interfering light beam; and a second interfering optical system that applies a second test surface measurement light beam to the second test surface which is rotating, and combines a reflected light beam from a second observation area within a second test surface with a second test surface reference light beam to obtain a second test surface interfering light beam, the observation position adjustment unit includes: a first observation position adjustment unit for successively changing a relative position, with respect to the first test surface, of the first test surface measurement light beam applied to the first test surface so that the first observation area is successively moved for each of a plurality of first orbicular areas set on the first test surface; and a second observation position adjustment unit for successively changing a relative position, with respect to the second test surface, of the second test surface measurement light beam applied to the second test surface so that the second observation area is successively moved for each of a plurality of second orbicular areas set on the second test surface, the interference fringe imaging system includes: a first interference fringe imaging system that successively captures the first test surface interfering light beam by a first test surface one-dimensional image sensor and successively images first test surface observation-position-specific interference fringes formed by the first test surface interfering light beam for each of a plurality of rotation positions of the first test surface in each of the plurality of first orbicular areas; a second interference fringe imaging system that successively captures the second test surface interfering light beam by a second test surface one-dimensional image sensor and successively images second test surface observation-position-specific interference fringes formed by the second test surface interfering light beam for each of a plurality of rotation positions of the second test surface in each of the plurality of second orbicular areas, and the shape analysis unit includes: a first test surface shape analysis unit for obtaining first-orbicular-area-specific shape information corresponding to each of the plurality of first orbicular areas based on the first test surface observation-position-specific interference fringes imaged by the first interference fringe imaging system, and obtaining entire area shape information of the first test surface by joining the pieces of first-orbicular-area-specific shape information together; and a second test surface shape analysis unit for obtaining second-orbicular-area-specific shape information corresponding to each of the plurality of second orbicular areas based on the second test surface observation-position-specific interference fringes imaged by the second interference fringe imaging system, and obtaining entire area shape information of the second test surface by joining the pieces of second-orbicular-area-specific shape information together.

According to a fourth aspect of the invention, the first observation position adjustment unit and the second observation position adjustment unit perform an initial adjustment of making a central axis of the first test surface measurement light beam and a central axis of the second test surface measurement light beam coincide with each other, and then, changes the relative position of the first test surface measurement light beam with respect to the first test surface and changes the relative position of the second test surface measurement light beam with respect to the second test surface while maintaining the condition where the two central axes coincide with each other, and the first interference fringe imaging system and the second interference fringe imaging system simultaneously image the first test surface observation-position-specific interference fringes and the second test surface observation-position-specific interference fringes for each of the observation positions.

According to a fifth aspect of the invention, the lightwave interference measurement device further comprises a thickness unevenness analysis unit for obtaining test surface thickness unevenness information based on the entire area shape information of the first test surface and the entire area shape information of the second test surface.

The above "straight belt form" unit a condition of extending linearly (being straight) while having a certain width.

The lightwave interference measurement device according to the present invention produces the following operational advantages by providing with the above-described structures:
In the lightwave interference measurement device of the present invention, the measurement light beam is applied to the test surface rotated around the rotation axis, and the relative position of the test surface with respect to the interfering optical system is adjusted so that the observation area is moved over the entire area within the test surface. Part of the applied measurement light beam is reflected from the observation area, and the observation-position-specific interference fringes formed by the interfering light beam of the reflected light beam and the reference light beam are imaged by the one-dimensional image sensor. The observation-position-specific interference fringes are successively imaged while the observation area is moved within the test surface, and the shape information of the test surface is obtained based on the imaged observation-position-specific interference fringes.

According to the lightwave interference measurement device of the present invention, by using the one-dimensional image sensor the image obtaining speed of which is generally faster than that of the two-dimensional image sensor, the observation-position-specific interference fringes can be imaged while the test surface is rotated, so that the time required for the measurement of the shape of a large-size plane test surface can be significantly reduced compared with that according to the related technique where it is necessary to perform imaging of each partial area of the test surface in a stationary state.

Moreover, even when fringe scan measurement is performed, it is necessary to perform fringe scan measurement on the entire area of the test surface only once, so that the number of times of fringe scan measurement can be significantly reduced compared with the related technique where it is necessary to perform fringe scan measurement every time for each partial area. Consequently, the possibility can be reduced that the measurement accuracy is degraded because of the adjustment error caused when fringe scan measurement is performed, so that the accuracy of the shape measurement of a large-size plane test surface can be sufficiently ensured.

Moreover, according to the mode provided with a measurement system for measuring the first test surface (the first interfering optical system, the first observation position adjustment unit, the first interference fringe imaging system and the first test surface shape analysis unit) and a measurement system for measuring the second test surface (the second interfering optical system, the second observation position adjustment unit, the second interference fringe imaging system and the second test surface shape analysis unit), the measurement of the first test surface and the measurement of the second test surface can be performed at a time.

Further, by the use of the one-dimensional image sensor (the first test surface one-dimensional image sensor and the second test surface one-dimensional image sensor) the image obtaining speed of which is generally faster than that of the two-dimensional image sensor, imaging of the interference fringes (the first test surface observation-position-specific interference fringes and the second test surface observation-position interference fringes) necessary for shape analysis can be performed in a condition where the test object is rotating.

Consequently, the time required for the measurement can be significantly reduced compared with the related technique where it is necessary to separately perform the measurement of the first test surface and the measurement of the second test surface and it is necessary to perform the imaging of the interference fringes corresponding to each partial area of the first test surface and the second test surface in a condition where the test object is stationary.

### BRIEF DESCRIPTION OF THE DRAWINGS

FIG. 1 is a schematic structural view of a lightwave interference measurement device according to a first embodiment;
FIG. 2 is a schematic structural view of a interfering optical system of the device shown in FIG. 1;
FIG. 3 is a schematic structural view of an analysis controller of the device shown in FIG. 1;
FIG. 4 is a view showing an example of orbicular area setting;
FIG. 5 is a schematic structural view of a lightwave interference measurement device according to a second embodiment;
FIG. 6 is a schematic structural view of a lightwave interference measurement device according to a third embodiment;
FIG. 7 is a schematic structural view of an optical system of the lightwave interference measurement device shown in FIG. 6;
FIG. 8 is a block diagram showing the structure of an analysis controller shown in FIG. 6;
FIG. 9 is a block diagram showing the structure of first test surface shape analysis unit shown in FIG. 8;
FIG. 10 is a block diagram showing the structure of second test surface shape analysis unit shown in FIG. 8;
FIG. 11 is a view showing an example of the setting of first orbicular areas on a first test surface; and
FIG. 12 is a view showing an example of the setting of second orbicular areas on a second test surface.

### DESCRIPTION OF EXEMPLARY EMBODIMENTS

Hereinafter, embodiments of the present invention will be described in detail with reference to the drawings. In the drawings used for the description of the embodiments, detailed shapes and structures are not shown, and the sizes of members and the distances between members are changed as appropriate.

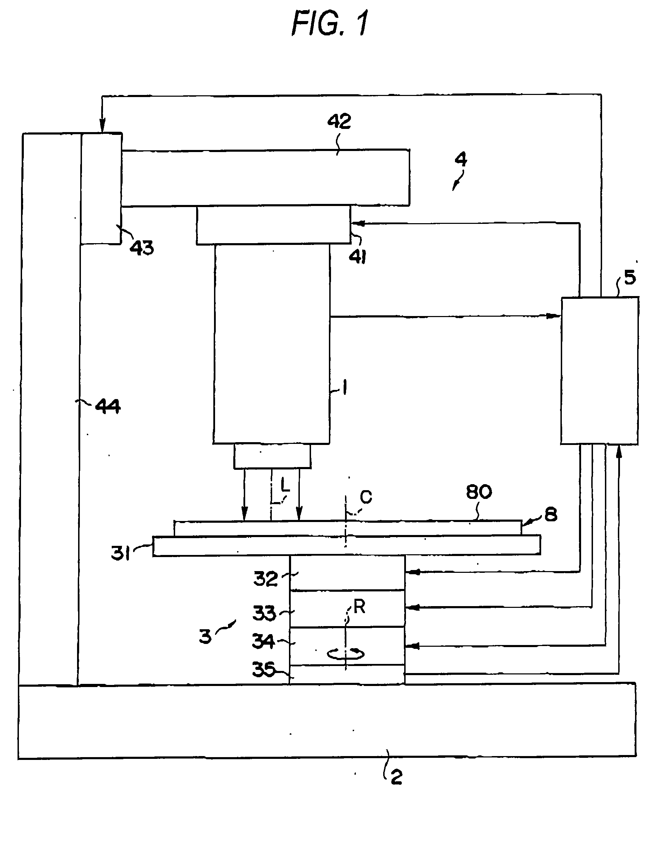

First, referring to FIGS. 1 to 3, the structure of a lightwave interference measurement device according to a first embodiment of the present invention will be described. The lightwave interference measurement device of the first embodiment shown in FIG. 1 measures and analyzes the shape of a large-size (for example, 300 to 600 mm in diameter) plane test surface 80 (the upper surface of a test object 8 in the figure) of the test object 8 (for example, a silicon wafer). The lightwave interference measurement device is provided with: an interferometer main unit 1; a test object aligner 3 placed on an optical surface plate 2; an interferometer position adjuster 4 that adjusts the position of the interferometer main unit 1; and a control analyzer 5 that performs shape analysis of the test surface 80 and the like.

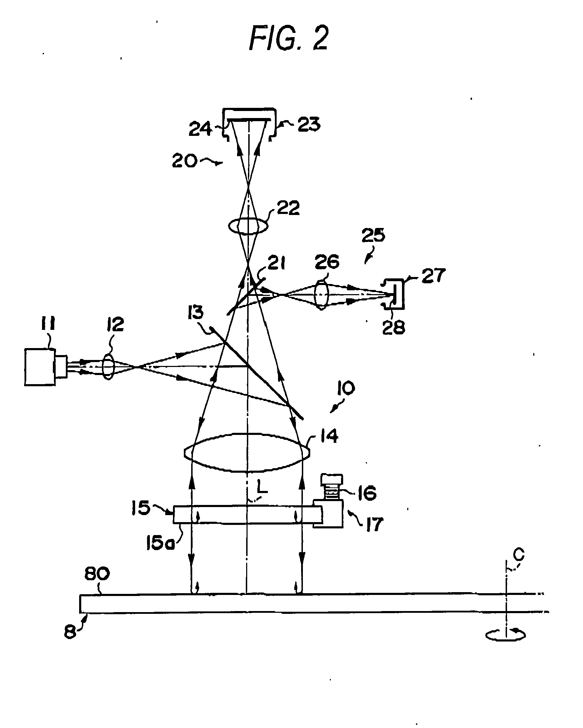

The interferometer main unit 1 is provided with a interfering optical system 10, an interference fringe imaging system 20 and an alignment imaging system 25 shown in FIG. 2. The interfering optical system 10 which has an Fizeau-type optical system arrangement is provided with: a light source unit 11 that outputs a highly coherent luminous flux; a beam diameter enlargement lens 12 that enlarges the diameter of the output light beam from the light source unit 11; a luminous flux splitting optical element 13 that reflects the luminous flux from the beam diameter enlargement lens 12 downward in the figure; a collimator lens 14 that collimates the luminous flux from the luminous flux splitting optical element 13; and a plane reference plate 15 that recursively reflects part of the plane wave from the collimator lens 14 into a reference light beam on a reference plane surface 15a and applies the remainder thereof as a measurement light beam that travels along the measurement optical axis L. The interfering optical system 10 combines the reflected light beam from the test surface 80 with the reference light beam to obtain an interfering light beam. The plane reference plate 15 is held by a fringe scan adapter 17 having a piezoelectric element 16, and is slightly moved in the direction of the measurement optical axis L when fringe scan measurement or the like is performed.

The interference fringe imaging system 20 performs imaging when the test surface 80 is rotating, and is provided with: an imaging lens 22 that condenses the interfering light beam passing through the luminous flux splitting optical elements 13 and 21 and traveling upward in the figure; and an imaging camera 23 having a one-dimensional image sensor 24 constituted by a CCD, a CMOS or the like. The interference fringe imaging system 20 obtains the image data of the straight belt form (linear) interference fringes formed on the one-dimensional image sensor 24 by the imaging lens 22.

The alignment imaging system 25 performs imaging when the inclination adjustment of the test surface 80 is performed, and is provided with: an imaging lens 26 that condenses the reference light beam reflected rightward in the figure by the luminous flux splitting optical element 21 and the reflected light beam from the test surface 80 (hereinafter, referred to as "object light beam"); and an imaging camera 27 having a two-dimensional image sensor 28 constituted by a CCD, a CMOS or the like. The alignment imaging system 25 obtains the image data of a spot image by the reference light beam and a spot image by the object light beam which spot images are formed on the two-dimensional image sensor 28 by the imaging lens 26.

On the other hand, as shown in FIG. 1, the test object aligner 3 is provided with: a holding stage 31 that holds the test object 8; a test surface position adjustment stage 32 that moves the test object 8 (test surface 80) held by the holding stage 31 rightward and leftward in the figure and in a direction vertical to the plane of the figure; a test surface inclination adjustment stage 33 that adjusts the inclination of the test surface 80 with respect to the measurement optical axis L; a rotation stage 34 that rotates the test surface 80 around the rotation axis R through the holding stage 31, the test surface position adjustment stage 32 and the test surface inclination adjustment stage 33; and a rotary encoder 35 that detects the rotation position (rotation angle) of the rotation stage 34.

The interferometer position adjuster 4 is provided with, as shown in FIG. 1: an XY stage 41 that moves the interferometer main unit 1 rightward and leftward in the figure and in the direction vertical to the plane of the figure; an X-axis mount 42 that supports the XY stage 41; a Z stage 43 that moves the interferometer main unit 1 upward and downward in the figure through the X-axis mount 42 and the XY stage 41; and a Z-axis mount 44 that supports the Z stage 43. While the Z stage 43 is for adjusting the height of the interferometer main unit 1 according to the thickness (the length in the vertical direction of the figure) of the test object 8, it can be omitted when it is unnecessary to perform such height adjustment. When it is unnecessary to move the interferometer main unit 1 in the direction vertical to the plane of the figure, a uniaxial movement stage (not shown) that moves the interferometer main unit 1 rightward and leftward in the figure may be provided instead of the XY stage 41.

The control analyzer 5 is provided with: an analysis controller, constituted by a computer or the like, that obtains the shape data of the test surface 80 based on the image data of the interference fringes obtained by the one-dimensional image sensor 24 and controls the driving of the stages of the test object aligner 3 and the interferometer position adjuster 4; a display that displays the result of the analysis by the analysis controller and images; and an input device constituted by a keyboard, a mouse and the like (these are all not shown).

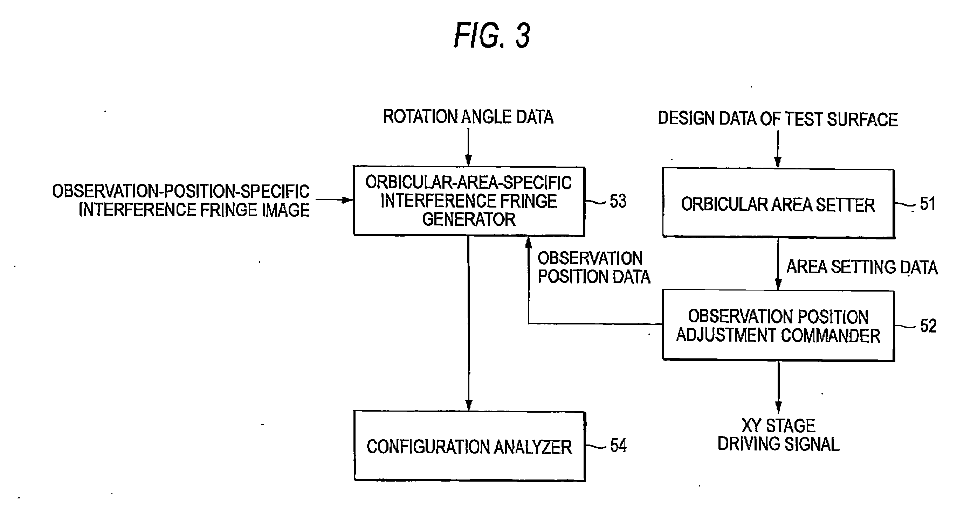

As shown in FIG. 3, the analysis controller is provided with an orbicular area setter 51, an observation position adjustment commander 52, an orbicular-area-specific interference fringe generator 53 and a shape analyzer 54 constituted by a CPU and a storage such as a hard disk provided in the analysis controller, programs stored in the storage and the like.

The orbicular area setter 51 sets a plurality of concentric orbicular areas (detailed later) on the test surface 80 based on the design data of the test surface 80.

The observation position adjustment commander 52 drives the XY stage 41 so as to change the position of the interferometer main unit 1 with respect to the test surface 80 so that the observation area to be observed by the interferometer main unit 1 is successively moved for each of the set plurality of orbicular areas.

The orbicular-area-specific interference fringe generator 53 generates orbicular-area-specific interference fringes corresponding to each of the plurality of orbicular areas based on the rotation-position-specific interference fringes successively imaged by the one-dimensional image sensor 24 when the test surface 80 is rotating and the rotation angle data of the test surface 80 when the rotation-position-specific interference fringes are imaged.

The shape analyzer 54 obtains entire area shape information of the test surface 80 based on the orbicular-area-specific interference fringes generated by the orbicular-area-specific interference fringe generator 53.

In the present embodiment, the test surface rotation unit is constituted by the rotation stage 34, and the observation position adjustment unit is constituted by the XY stage 41 and the observation position adjustment commander 52. The shape analysis unit is constituted by the orbicular-area-specific interference fringe generator 53 and the shape analyzer 54.

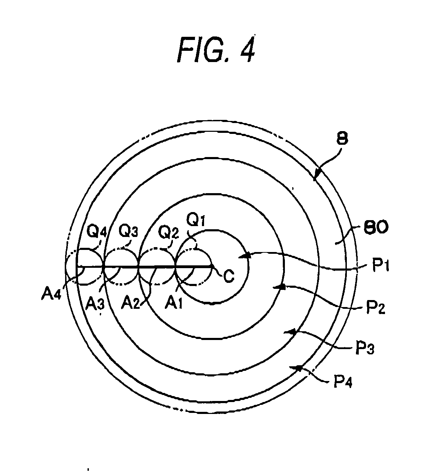

Hereinafter, the working and measurement procedures of the lightwave interference measurement device according to the first embodiment will be described.
(1) First, as shown in FIG. 4, the above-mentioned plurality of orbicular areas (in FIG. 4, four orbicular areas P₁ to P₄ are schematically illustrated) are set on the test surface 80. These orbicular areas P₁ to P₄ are set by the orbicular area setter 51 based on the design data of the test surface 80 and the sizes of the observation areas to be observed by the interferometer main unit 1 (in FIG. 4, four observation areas Q₁ to Q₄ are schematically illustrated, and the sizes thereof are the same). The test surface 80 is divided in a radial direction with respect to the position where the rotation axis R is set on the test surface 80 (in the present embodiment, the rotation axis R is set so as to coincide with the central axis C of the test surface).
   Of the orbicular areas P₁ to P₄ shown in FIG. 4, the orbicular area P₁ situated in the center is disciform. In the present embodiment, such a disciform area is also referred to as an orbicular area. Area setting may be made so that adjoining ones of the orbicular areas P₁ to P₄ overlap each other.
(2) Then, the test object 8 is placed on the holding stage 31 as shown in FIG. 1, and by using the test surface inclination adjustment stage 33, the inclination of the test surface 80 is adjusted so that the measurement optical axis L and the central axis C of the test surface 80 are parallel to each other. It is now assumed that the test surface 80 and the central axis C are orthogonal to each other. In this inclination adjustment, as shown in FIG. 2, the measurement light beam is applied to the test surface 80, a spot image formed by the light beam (object light beam) reflected from the test surface 80 and a spot image formed by the reflected light beam (reference light beam) from the reference plane surface 15a are imaged by the imaging camera 27 of the alignment imaging system 25, and adjustment is made so that these two spot images coincide with each other. It is assumed that the alignment of the optical members of the interferometer main unit 1 including the plane reference plate 15 is adjusted in advance.
(3) Then, by using the test surface position adjustment stage 32, the positions of the rotation axis R of the rotation stage 34 and the central axis C of the test surface 80 are aligned so that the central axis C substantially coincides with the rotation axis R. In the present embodiment, of the orbicular areas P₁ to P₄ shown in FIG. 4, the orbicular area P₄ situated on the outermost side has a width (length in the radial direction) smaller than the length of the diameter of the observation area Q4 when the orbicular area P₄ is observed. Consequently, in a case where the position alignment is made so that the rotation axis R and the central axis C completely coincide with each other, part of the observation area Q4 lies off the edge of the test surface 80 when the orbicular area P₄ is observed (the locus of the outermost point of the observation area Q4 is shown by the alternate long and two dashes line). Conversely, within the range of the area that lies off the edge, even if an error occurs (position shift between the rotation axis R and the central axis C) in the above-described position alignment, the entire area of the test surface 80 can be covered (scanned), so that no trouble occurs in the measurement that follows. For this reason, it is unnecessary to provide a mechanism for accurately performing the above-described position alignment.
(4) Then, the test surface 80 is rotated around the rotation axis R by using the rotation stage 34. While the rotation speed may be arbitrarily set, in the present embodiment, the rotation speed is set, for example, so that the test surface 80 makes one revolution in 0.1 second.
(5) Then, the measurement of the orbicular area P₁ set on the test surface 80 is performed by the following procedures:
   <a> First, by using the XY stage 41, the position of the interferometer main unit 1 with respect to the test surface 80 which is rotating (strictly, the rotation axis R) is adjusted so that the observation area Q1 is situated on the orbicular area P₁ as shown in FIG. 4. In the present embodiment, the XY stage 41 is driven by a command signal from the observation position adjustment commander 52 to thereby automatically adjust the position of the interferometer main unit 1.
   <b> Then, the measurement light beam is applied to the test surface 80 which is rotating, and for each of a plurality of rotation positions of the test surface 80, observation-position-specific interference fringes formed by the interference between the object light beam reflected from the orbicular area P₁ and the reference light beam from the reference plane surface 15a of the plane reference plate 15 (of the interference fringes observed within the observation area Q1, straight belt form ones corresponding to an imaging area A1 for one imaging by the one-dimensional image sensor 24) are successively imaged by using the imaging camera 23 (one-dimensional image sensor 24) of the interference fringe imaging system 20 while the test surface 80 makes one revolution, and the image data thereof is successively inputted to the orbicular-area-specific interference fringe generator 53. While the number of times of imaging may be arbitrarily set, in the present embodiment, for example, imaging is performed 3600 times in 0.1 second in which the test surface 80 makes one revolution (once every 0.1 revolution of the test surface 80). Every time rotation-position-specific interference fringes are imaged, the rotation angle of the test surface 80 at the point of time of the imaging is detected by the rotary encoder 35, and the data thereof is successively inputted to the orbicular-area-specific interference fringe generator 53.
(6) Then, the measurements of the other orbicular areas P₂ to P₄ set on the test surface 80 are successively performed. The measurement procedures are similar to those of the above-described measurement of the orbicular area P₁. That is, measurement is performed by successively replacing the orbicular area P₁, the observation area Q₁ and the area A1 in the above-described procedures of <a> and <b> of (5) with the orbicular areas P₂ to P₄, the observation areas Q₂ to Q₄ and the imaging areas A₂ to A₄, respectively. When fringe scan measurement is performed, by using the fringe scan adapter 17, the position of the plane reference plate 15 in the direction of the measurement optical axis L is changed as appropriate, and the above-described procedures (5) and (6) are repeated every change.
(7) Then, the orbicular-area-specific interference fringes corresponding to each of the orbicular areas P₁ to P₄ are generated by the orbicular-area-specific interference fringe generator 53 based on the observation-position-specific interference fringes corresponding to each of the orbicular areas P₁ to P₄ which interference fringes are imaged by the imaging camera 23 (one-dimensional image sensor 24) and the rotation angle data of the test surface 80 detected by the rotary encoder 35.
(8) Then, entire area shape information of the test surface 80 is obtained by the shape analyzer 54 based on the generated orbicular-area-specific interference fringes. Specifically, by joining the orbicular-area-specific interference fringes together, the entire area interference fringes corresponding to the entire area of the test surface 80 can be generated and the entire area shape information of the test surface 80 can be obtained based on the entire area interference fringes. Alternatively, by obtaining the orbicular-area-specific shape information corresponding to each of the orbicular areas P₁ to P₄ based on the orbicular-area-specific interference fringes and joining the pieces of orbicular-area-specific shape information together, the entire area shape information of the test surface 80 can be obtained. For the joining of the orbicular-area-specific shape information at this time, a known synthetic aperture method may be applied. Specifically, for example, when the error of the parallelism between the measurement optical axis L and the rotation axis R is minute to an extent that can be ignored at the time of imaging of the interference fringes of the orbicular areas P₁ to P₄, by arranging the pieces of shape information of the orbicular areas P₁ to P₄ with respect to one another, the entire area shape information of the test surface 80 can be obtained (in this case, it is unnecessary to set areas overlapping each other between adjoining ones of the orbicular areas P₁ to P₄).

On the other hand, when the error of the parallelism between the measurement optical axis L and the rotation axis R cannot be ignored, it is necessary to correct it. For example, in a case where although the measurement optical axis L and the rotation axis R are parallel to each other when the orbicular area P₁ is imaged, a relative angle error □□ is caused between the measurement optical axis L and the rotation axis R when the orbicular area P₂ is imaged, if the shape information of the orbicular area P₁ and the shape information of the orbicular area P₂ are arranged as they are and joined together, an unnecessary inclination is superimposed between the orbicular areas P1 and P₂. Therefore, it is necessary to join them after the angle error Δ θ is corrected.

This correction of the angle error Δ θ is performed, for example, by the following procedures: First, an area where the orbicular areas P₁ and P₂ overlap with each other (hereinafter, referred to as "overlap area") are set between the orbicular areas P₁ and P₂. Then, the angle error Δ θ is obtained by comparing the shape information of the overlap area obtained by the rotation-position-specific interference fringes of the orbicular area P₁ with the shape information of the overlap area obtained by the rotation-position-specific interference fringes of the orbicular area P₂ (intrinsically, they should coincide with each other), and based on the obtained angle error Δ θ, the pieces of shape information of the partial areas corresponding to the rotation-position-specific interference fringes of the orbicular area P₂ are re-arranged. Similar procedures are performed for the aperture synthesis of the other orbicular areas P₃ and P₄.

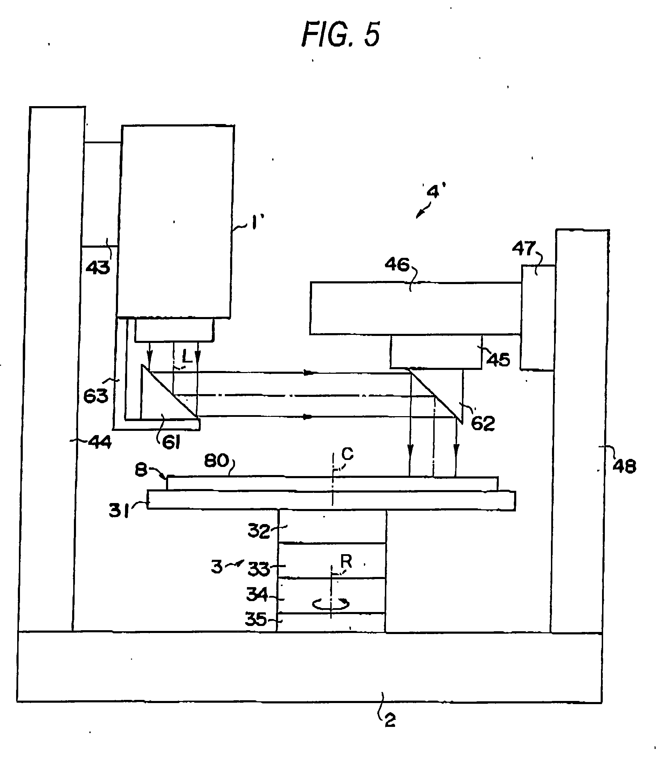

Next, referring to FIG. 5, the structure of a lightwave interference measurement device according to a second embodiment of the present invention (hereinafter, sometimes referred to as "second embodiment device") will be described. In FIG. 5, structural members conceptually similar to those of the lightwave interference measurement device of the first embodiment shown in FIG. 1 (hereinafter, sometimes referred to as "first embodiment device") are denoted by the same reference numerals as those used in FIG. 1, and detailed descriptions thereof are omitted. Although not shown in FIG. 5, a control analyzer similar to the control analyzer 5 of the first embodiment device is provided.

The second embodiment device shown in FIG. 5 is provided with: a reflecting optical element 61 that reflects rightward in the figure the measurement light beam outputted downward in the figure from an interferometer main unit 1'; and a reflecting optical element 62 that reflects the measurement light beam from the reflecting optical element 61 toward the test surface 80 situated below in the figure. The reflecting optical element 61 is held by the interferometer main unit 1' through a bracket 63. The reflecting optical element 62 is supported by a Z-axis mount 48 thorough a linear stage 45 that moves the reflecting optical element 62 rightward and leftward in the figure, an X-axis mount 46 that supports the linear stage 45 and a Z stage 47 that moves the reflecting optical element 62 upward and downward in the figure through the X-axis mount 46 and the linear stage 45.

While in the above-described first embodiment device, the observation area is moved by moving the interferometer main unit 1 rightward and leftward in the figure through the XY stage 41 shown in FIG. 1, in the second embodiment device, the observation area is moved by moving the reflecting optical element 62 rightward and leftward in the figure through the linear stage 45 shown in FIG. 5. Consequently, the movement mechanism can be made small in size compared with the first embodiment device.

The internal structure of the interferometer main unit 1' is similar to that of the first embodiment device (see FIG. 2), and the measurement procedures are similar to those of the first embodiment device.

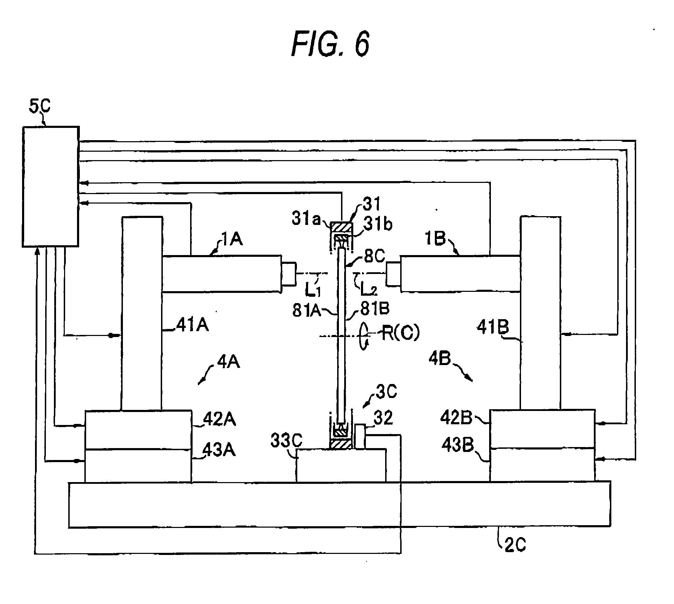

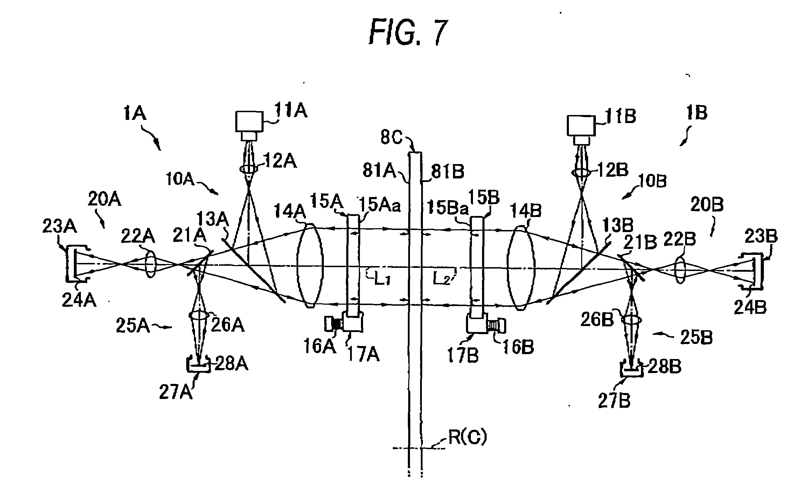

Next, referring to FIGS. 6 and 7, the structure of a lightwave interference measurement device according to a third embodiment of the present invention (hereinafter, sometimes referred to as "third embodiment device") will be described. The lightwave interference measurement device shown in FIG. 6 measures and analyzes the shapes of two test surfaces (a first test surface 81A and a second test surface 81B) parallel to each other and possessed by a large-size (for example, 300 to 600 mm in diameter) plane-parallel test object 8C (for example, a silicon wafer) and thickness unevenness of the test object 8C. The lightwave interference measurement device is provided with: a first interferometer 1A disposed on the side of the first test surface 81A; a second interferometer 1B disposed on the side of the second test surface 81B; a test object aligner 3C placed on an optical surface plate 2C; a first interferometer position adjuster 4A that adjusts the position of the first interferometer 1A; a second interferometer position adjuster 4B that adjusts the position of the second interferometer 1B; and a control analyzer 5C that performs shape analysis of the first test surface 81A and the second test surface 81B and the like.

The first interferometer 1A is provided with, as shown in FIG. 7, a first interfering optical system 10A, a first interference fringe imaging system 20A and a first alignment imaging system 25A. The first interfering optical system 10A which has an Fizeau-type optical system arrangement is provided with: a light source unit 11A, that outputs a highly coherent luminous flux; a beam diameter enlargement lens 12A that enlarges the diameter of the output light beam from the light source unit 11A; a luminous flux splitting optical element 13A that reflects the luminous flux from the beam diameter enlargement lens 12A rightward in the figure; a collimator lens 14A that collimates the luminous flux from the luminous flux splitting optical element 13A; and a plane reference plate 15A that recursively reflects part of the plane wave from the collimator lens 14A into a first test surface reference light beam on a reference plane surface 15Aa and applies the remainder thereof as a first test surface measurement light beam that travels along the measurement optical axis L₁. The first interfering optical system 10A combines the reflected light beam from the first test surface 81A with the first test surface reference light beam to obtain a first test surface interfering light beam. The plane reference plate 15A is held by a fringe scan adapter 17A having a piezoelectric element 16A, and is slightly moved in the direction of the measurement optical axis L₁ when fringe scan measurement or the like is performed.

The first interference fringe imaging system 20A performs imaging when the test object 8C (first test surface 81A) is rotating, and is provided with: an imaging lens 22A that condenses the first test surface interfering light beam passing through the luminous flux splitting optical elements 13A and 21A and traveling leftward in the figure; and an imaging camera 23A having a first test surface one-dimensional image sensor 24A constituted by a CCD, a CMOS or the like. The first interference fringe imaging system 20A obtains the image data of the straight belt form (a condition of extending linearly while having a certain width) interference fringes (first test surface observation-position-specific interference fringes) formed on the first test surface one-dimensional image sensor 24A by the imaging lens 22A.

The alignment imaging system 25A performs imaging when the inclination adjustment of the test object 8C or the like is performed, and is provided with: an imaging lens 26A that condenses the first test surface reference light beam reflected downward in the figure by the luminous flux splitting optical element 21A and the reflected light beam from the first test surface 81A (hereinafter, referred to as "first object light beam"); and an imaging camera 27A having a two-dimensional image sensor 28A constituted by a CCD, a CMOS or the like. The alignment imaging system 25A images a spot image by the first test surface reference light beam and a spot image by the first object light beam which spot images are formed on the two-dimensional image sensor 28A by the imaging lens 26A.

The second interferometer 1B which has a similar structure to the first interferometer 1A is provided with a second interfering optical system 10B, a second interference fringe imaging system 20B and a second alignment imaging system 25B. The second interfering optical system 10B which has an Fizeau-type optical system arrangement is provided with: a light source unit 11B that outputs a highly coherent luminous flux; a beam diameter enlargement lens 12B that enlarges the diameter of the output light beam from the light source unit 11B; a luminous flux splitting optical element 13B that reflects the luminous flux from the beam diameter enlargement lens 12B leftward in the figure; a collimator lens 14B that collimates the luminous flux from the luminous flux splitting optical element 13B; and a plane reference plate 15B that recursively reflects part of the plane wave from the collimator lens 14B into a second test surface reference light beam on a reference plane surface 15Ba and applies the remainder thereof as a second test surface measurement light beam that travels along the measurement optical axis L₂. The second interfering optical system 10B combines the reflected light beam from the second test surface 81B with the second test surface reference light beam to obtain a second test surface interfering light beam. The plane reference plate 15B is held by a fringe scan adapter 17B having a piezoelectric element 16B, and is slightly moved in the direction of the measurement optical axis L₂ when fringe scan measurement or the like is performed.

The second interference fringe imaging system 20B performs imaging when the test object 8C (second test surface 81B) is rotating, and is provided with: an imaging lens 22B that condenses the second test surface interfering light beam passing through the luminous flux splitting optical elements 13B and 21B and traveling rightward in the figure; and an imaging camera 23B having a second test surface one-dimensional image sensor 24B constituted by a CCD, a CMOS or the like. The second interference fringe imaging system 20B obtains the image data of the straight belt form interference fringes (second test surface observation-position-specific interference fringes) formed on the second test surface one-dimensional image sensor 24B by the imaging lens 22B.

The alignment imaging system 25B performs imaging when the inclination adjustment of the test object 8C or the like is performed, and is provided with: an imaging lens 26B that condenses the second test surface reference light beam reflected downward in the figure by the luminous flux splitting optical element 21B and the reflected light beam from the second test surface 81B (hereinafter, referred to as "second object light beam"); and an imaging camera 27B having a two-dimensional image sensor 28B constituted by a CCD, a CMOS or the like. The alignment imaging system 25B images a spot image by the second test surface reference light beam and a spot image by the second object light beam which spot images are formed on the two-dimensional image sensor 28B by the imaging lens 26B.

On the other hand, as shown in FIG. 6, the test object aligner 3C is provided with: a rotation holding stage 36 that rotatably holds the test object 8C (test surface rotation unit in the present embodiment); a rotation angle detection sensor 37 that detects the position of rotation (the angle of rotation) of the test object 8C by the rotation holding stage 36; and a test surface inclination adjustment stage 33C that adjusts the inclination of the test object 8C (the first test surface 81A, the second test surface 81B) held by the rotation holding stage 36 with respect to the measurement optical axes L₁ and L₂. The rotation holding stage 36 is provided with a hollow fixed supporter 36a and a ring-shaped rotary member 36b rotatably supported through a non-illustrated air bearing or the like inside the fixed supporter 36a. The rotation holding stage 36 rotates the test object 8C held inside the rotary member 36b around the rotation axis R.

The first interferometer position adjuster 4A is provided with, as shown in FIG. 6: a first Z stage 41A that holds the first interferometer 1A so as to be movable upward and downward in the figure; a first XY stage 42A that moves the first interferometer 1A rightward and leftward in the figure and in the direction vertical to the plane of the figure through the first Z stage 41A; and a first interferometer inclination adjustment stage 43A that performs inclination adjustment of the first interferometer 1A through the first XY stage 42A and the first Z stage 41 A.

Likewise, the second interferometer position adjuster 4B is provided with: a second Z stage 41B that holds the second interferometer 1B so as to be movable upward and downward in the figure; a second XY stage 42B that moves the second interferometer 1B rightward and leftward in the figure and in the direction vertical to the plane of the figure through the second Z stage 41B; and a second interferometer inclination adjustment stage 43B that performs inclination adjustment of the second interferometer 1B through the second XY stage 42B and the second Z stage 41B.

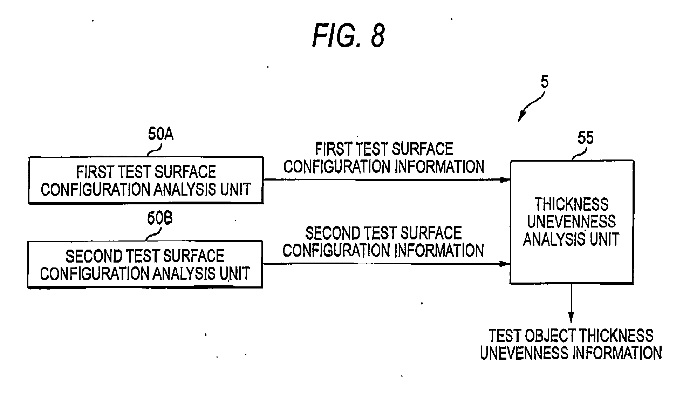

The control analyzer 5C is constituted by a computer apparatus or the like that obtains the shape data of each of the first test surface 81 A and the second test surface 81B and controls the driving of the stages of the test object aligner 3C, the first interferometer position adjuster 4A and the second interferometer position adjuster 4B. As shown in FIG. 8, the control analyzer 5C is provided with first test surface shape analysis unit 50A, second test surface shape analysis unit 50B and thickness unevenness analysis unit 55 constituted by a CPU and a storage such as a hard disk provided in the computer apparatus, programs stored in the storage, and the like.

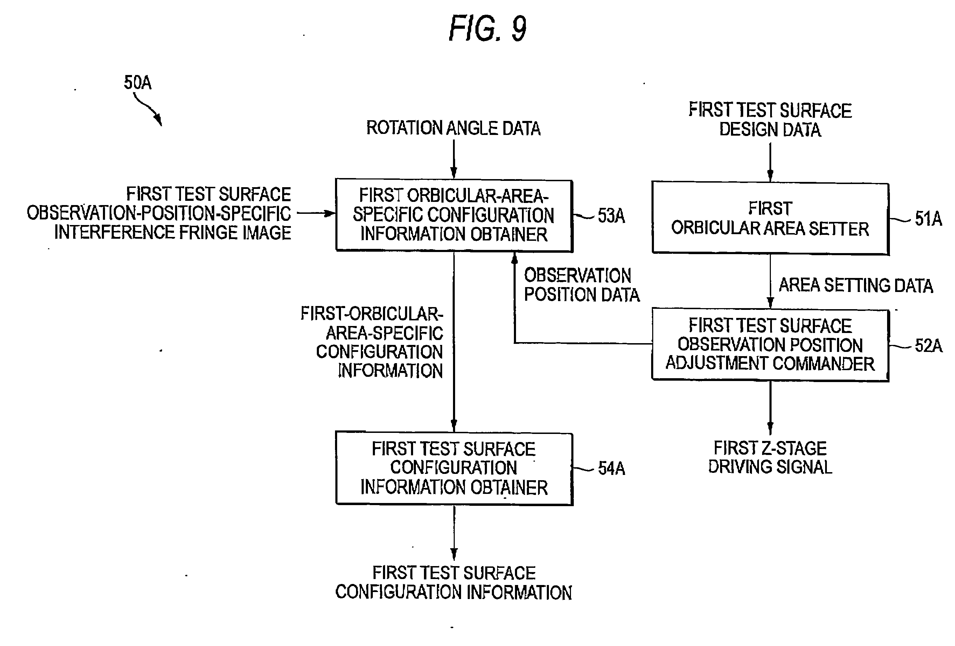

The first test surface shape analysis unit 50A obtains shape information of the first test surface 81A. As shown in FIG. 9, the first test surface shape analysis unit 50A is provided with a first orbicular area setter 51A, a first test surface observation position adjustment commander 52A, a first-orbicular-area-specific shape information obtainer 53A and a first test surface shape information obtainer 54A constituted by a CPU and a storage such as a hard disk provided in the computer apparatus, programs stored in the storage, and the like.

The first orbicular area setter 51A sets a plurality of concentric first orbicular areas on the first test surface 81 A based on the design data of the first test surface 81A.

The first test surface observation position adjustment commander 52A drives the first Z stage 41A and the first XY stage 42A so as to change the position of the first interferometer 1A with respect to the first test surface 81A so that the first observation area to be observed by the first interferometer 1A is successively moved for each of the set plurality of first orbicular areas.

The first-orbicular-area-specific shape information obtainer 53A obtains the first-orbicular-area-specific shape information corresponding to each of the plurality of first orbicular areas based on the first test surface observation-position-specific interference fringes of the first test surface 81A successively imaged by the first test surface one-dimensional image sensor 24A when the test object 8C is rotating and the rotation angle data of the first test surface 81A when the first test surface observation-position-specific interference fringes are imaged.

The first test surface shape information obtainer 54A obtains entire area shape information of the first test surface 81 A (first test surface shape information) by joining together the pieces of first-orbicular-area-specific shape information obtained by the first-orbicular-area-specific shape information obtainer 53A.

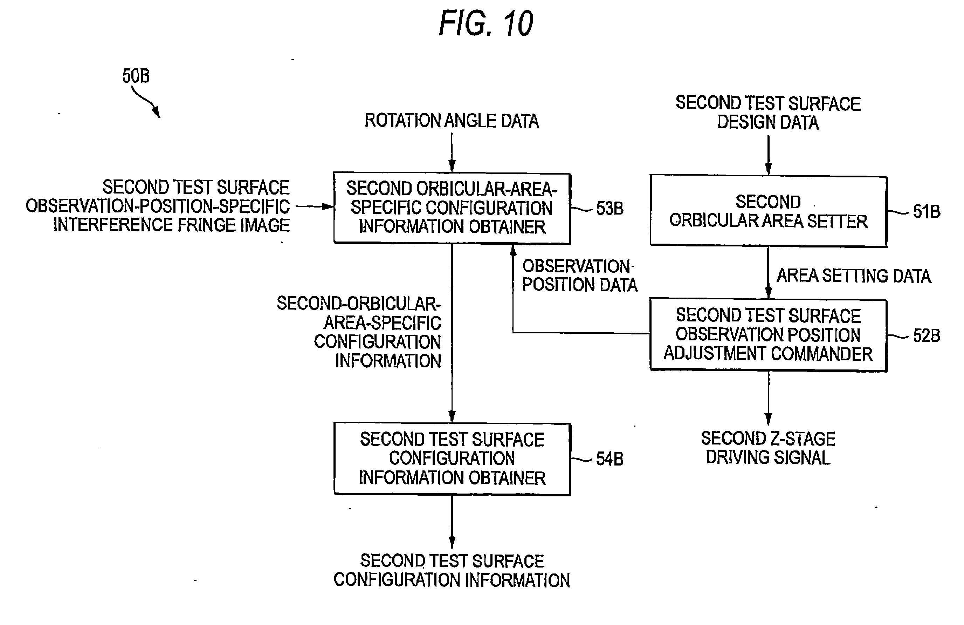

On the other hand, the second test surface shape analysis unit 50B obtains shape information of the second test surface 81B. As shown in FIG. 10, the second test surface shape analysis unit 50B is provided with a second orbicular area setter 51B, a second test surface observation position adjustment commander 52B, a second-orbicular-area-specific shape information obtainer 53B and a second test surface shape information obtainer 54B constituted by a CPU and a storage such as a hard disk provided in the computer apparatus, programs stored in the storage, and the like.

The second orbicular area setter 51B sets a plurality of concentric second orbicular areas on the second test surface 81B based on the design data of the second test surface 81B.

The second test surface observation position adjustment commander 52B drives the second Z stage 41B and the second XY stage 42B so as to change the position of the second interferometer 1B with respect to the second test surface 81B so that the second observation area to be observed by the second interferometer 1B is successively moved for each of the set plurality of second orbicular areas.

The second-orbicular-area-specific shape information obtainer 53B obtains the second-orbicular-area-specific shape information corresponding to each of the plurality of second orbicular areas based on the second test surface observation-position-specific interference fringes of the second test surface 81B successively imaged by the second test surface one-dimensional image sensor 24B when the test object 8C is rotating and the rotation angle data of the second test surface 81B when the second test surface observation-position-specific interference fringes are imaged.

The second test surface shape information obtainer 54B obtains entire area shape information of the second test surface 81B (second test surface shape information) by joining together the pieces of second-orbicular-area-specific shape information generated by the second-orbicular-area-specific shape information obtainer 53B.

The thickness unevenness analysis unit 55 obtains the thickness unevenness of the test object 8C based on the shape information of the first test surface 81 A obtained by the first test surface shape analysis unit 50A and the shape information of the second test surface 81B obtained by the second test surface shape analysis unit 50B.

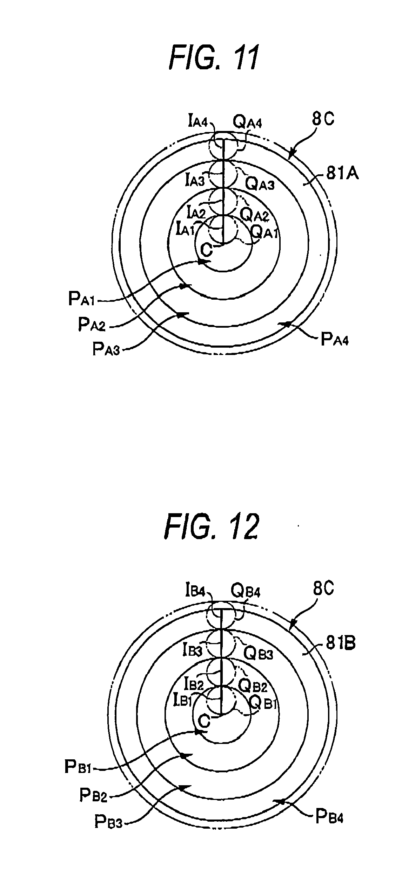

Hereinafter, the working and measurement procedures of the above-described third embodiment device will be described.
(1) First, relative alignment adjustment between the first interferometer 1A and the second interferometer 1B is performed. This alignment adjustment is for making the measurement optical axis L₁ of the first interferometer 1A and the measurement optical axis L₂ of the second interferometer 1B coincide with each other, and is manually performed by the operator by using the first interferometer position adjuster 4A and the second interferometer position adjuster 4B. The procedures thereof are as follows:
   <a> A parallel plate jig (not shown) having two optical plane surfaces (optical flats) parallel to each other is disposed between the first interferometer 1A and the second interferometer 1B (the parallel plate jig may be held by the rotation holding stage 36). In this disposing stage, coarse adjustment is made so that the two optical plane surfaces of the parallel plate jig are as vertical to the measurement optical axes L₁ and L₂ as possible.
   <b> The first test surface measurement light beam is applied from the first interferometer 1 A to one optical plane surface of the parallel plate jig, a spot image formed by the light beam reflected from the one optical plane surface and a spot image formed by the reference light beam from the reference plane surface 15Aa are imaged by the imaging camera 27A of the alignment imaging system 25A, and by using the first interferometer inclination adjustment stage 43A, the inclination of the first interferometer 1A is adjusted so that these two spot images coincide with each other. By this inclination adjustment, the measurement optical axis L₁ of the first interferometer 1A is made vertical to the one optical plane surface of the parallel plate jig. Instead of this technique, the following may be performed: The interference fringes formed by the light beam reflected from the one optical plane surface and the reference light beam from the reference plane surface 15Aa are imaged by the imaging camera 27, and the inclination of the first interferometer 1 A is adjusted so that these interference fringes become null fringes.
   <c> Likewise, the second test surface measurement light beam is applied from the second interferometer 1B to the other optical plane surface of the parallel plate jig, a spot image formed by the light beam reflected from the other optical plane surface and a spot image formed by the reference light beam from the reference plane surface 15Ba are imaged by the imaging camera 27B of the alignment imaging system 25B, and by using the second interferometer inclination adjustment stage 43B, the inclination of the second interferometer 1B is adjusted so that these two spot images coincide with each other. By this inclination adjustment, the measurement optical axis L₂ of the second interferometer 1B is made vertical to the other optical plane surface of the parallel plate jig, whereby the measurement optical axes L₁ and L₂ are made parallel to each other. Instead of this technique, the following may be performed: The interference fringes formed by the light beam reflected from the other optical plane surface and the reference light beam from the reference plane surface 15Ba are imaged by the imaging camera 27B, and the inclination of the second interferometer 1B is adjusted so that these interference fringes become null fringes.
   <d> Instead of the parallel plate jig, a spherical jig (not shown) that can be regarded as optically spherical is disposed between the first interferometer 1A and the second interferometer 1B.
   <e> The first test surface measurement light beam is applied from the first interferometer 1A to the spherical jig, the interference fringes (concentric ring shape) formed by the light beam reflected from the spherical jig and the reference light beam from the reference plane surface 15Aa are imaged by the imaging camera 27 of the alignment imaging system 25A, and by using the first Z stage 41A and the first XY stage 42A, the position of the first interferometer 1A is adjusted so that the measurement optical axis L₁ is situated at the center of the interference fringes.
   <f> Likewise, the second test surface measurement light beam is applied from the second interferometer 1B to the spherical jig, the interference fringes (concentric ring shape) formed by the light beam reflected from the spherical jig and the reference light beam from the reference plane surface 15Ba are imaged by the imaging camera 27B of the alignment imaging system 25B, and by using the second Z stage 41B and the second XY stage 42B, the position of the second interferometer 1B is adjusted so that the measurement optical axis L₂ is situated at the center of the interference fringes. By this position adjustment, the measurement optical axes L₁ and L₂ are made to coincide with each other. The postures of the first interferometer 1A and the second interferometer 1B in the condition where the measurement optical axes L₁ and L₂ coincide with each other are stored in the first test surface observation position adjustment commander 52A and the second test surface observation position adjustment commander 52B as initial reference postures, respectively. Thereafter, the first interferometer 1A and the second interferometer 1B are moved while maintaining the condition where the measurement optical axes L₁ and L₂ thereof coincide with each other.
(2) Then, the test object 8C is set so as to be held by the rotation holding stage 36, and the inclination of the test object 8C with respect to the first interferometer 1A and the second interferometer 1B is adjusted. This inclination adjustment is for making the first test surface 81A and the second test surface 81B of the test object 8C substantially vertical to the measurement optical axis L₁ of the first interferometer 1A and the measurement optical axis L₂ of the second interferometer 1B, and is manually performed by the operator by using the test surface inclination adjustment stage 33C. The general outline of the procedures thereof is as shown below. In the present embodiment, the central axis C of the test object 8C substantially coincides with the rotation axis R of the rotation holding stage 36 at the point of time when the test object 8C is set so as to be held by the rotation holding stage 36.
   [a] The first test surface measurement light beam is applied from the first interferometer 1A to the first test surface 81A, the interference fringes formed by the light beam reflected from the first test surface 81A and the reference light beam from the reference plane surface 15Aa are imaged by the imaging camera 27 of the alignment imaging system 25A, and in order that the interference fringes are null fringes, the inclination of the test object 8C is adjusted by using the test surface inclination adjustment stage 33C. This inclination adjustment may also be performed as follows:
   [a'] That is, the second test surface measurement light beam is applied from the second interferometer 1B to the second test surface 81 B, the interference fringes formed by the light beam reflected from the second test surface 81B and the reference light beam from the reference plane surface 15Ba are imaged by the imaging camera 27B of the second alignment imaging system 25B, and in order that the interference fringes are null fringes, the inclination of the test object 8C is adjusted by using the test surface inclination adjustment stage 33C.
(3) Then, as shown in FIG. 11, the above-mentioned plurality of first orbicular areas (in FIG. 11, four first orbicular areas P_{A1} to P_{A4} are schematically illustrated) are set on the first test surface 81A. These first orbicular areas P_{A1} to P_{A4} are set by the first orbicular area setter 51A based on the design data of the first test surface 81A and the sizes of the first observation areas to be observed by the first interferometer 1A (in FIG. 11, four first observation areas QA1 to QA4 are schematically illustrated, and the sizes thereof are the same), and are formed so as to be concentric with one another with respect to the position where the rotation axis R is set (in the present embodiment, the rotation axis R is set so as to coincide with the central axis C of the test object 8C) on the first test surface 81 A.
(4) Likewise, as shown in FIG. 12, a plurality of second orbicular areas (in FIG. 12, four second orbicular areas P_{B1} to P_{B4} are schematically illustrated) are set on the second test surface 81B. These second orbicular areas P_{B1} to P_{B4} are set by the second orbicular area setter 51B based on the design data of the second test surface 81B and the sizes of the second observation areas to be observed by the second interferometer 1B (in FIG. 12, four second observation areas Q_{B1} to Q_{B4} are schematically illustrated, and the sizes thereof are the same), and are formed so as to be concentric with one another with respect to the position where the rotation axis R is set (the central axis C of the test object 8C) on the second test surface 81B.
   Of the first orbicular areas P_{A1} to P_{A4} shown in FIG. 11 and the second orbicular areas P_{B1} to P_{B4} shown in FIG. 12, the first orbicular area P_{A1} situated in the center and the second orbicular area P_{B1} situated in the center are disciform. In the present embodiment, such disciform areas are also referred to as orbicular areas. Area setting may be made so that adjoining ones of the first orbicular areas P_{A1} to P_{A4} and the second orbicular areas P_{B1} and P_{B4} overlap each other.
   In the present embodiment, of the first orbicular areas P_{A1} to P_{A4} shown in FIG. 11, the first orbicular area P_{A4} situated on the outermost side has a width (length in the radial direction) smaller than the length of the diameter of the first observation area QA4 when the first orbicular area P_{A4} is observed. Likewise, of the second orbicular areas P_{B1} to P_{B4} shown in FIG. 12, the second orbicular area P_{B4} on the outermost side has a width (length in the radial direction) smaller than the length of the diameter of the second observation area Q_{B4} when the second orbicular area P_{B4} is observed. Consequently, at the point of time when the test object 8C is set so as to be held by the rotation holding stage 36, in a case where the central axis C of the test object 8C and the rotation axis R of the rotation holding stage 36 completely coincide with each other, part of the first observation area Q_{A4} lies off the edge of the first test surface 81A when the first orbicular area P_{A4} is observed, and likewise, when the second orbicular area P_{B4} is observed, part of the second observation area Q_{B4} lies off the edge of the second test surface 81B (the locus of the outermost points of the first observation area Q_{A4} and the second observation area Q_{B4} are each shown by the alternate long and two dashes line). Conversely, within the range of the area that lies off the edge, even if a position shift occurs between the central axis C and the rotation axis R, the entire areas of the first test surface 81A and the second test surface 81B can be covered (scanned), so that no trouble occurs in the measurement that follows. For this reason, it is unnecessary to provide a mechanism for accurately performing the position alignment between the central axis C and the rotation axis R.
(5) Then, the test object 8C is rotated around the rotation axis R by using the rotation holding stage 36. While the rotation speed may be arbitrarily set, in the present embodiment, the rotation speed is set, for example, so that the test object 8C makes one revolution in 0.1 second.
(6) Then, the measurement of the first orbicular area P_{A1} set on the first test surface 81A and the measurement of the second orbicular area P_{B1} set on the second test surface 81B are performed by the following procedures:
   [a] First, the positions of the first interferometer 1A and the second interferometer 1B with respect to the test object 8C which is rotating are adjusted so that the first observation area QA1 is situated over the first orbicular area P_{A1} as shown in FIG. 11 and that the second observation area Q_{B1} is situated over the second orbicular area P_{B1} as shown in FIG. 12. In the present embodiment, based on the position data of the rotation axis R of the rotation holding stage 36 and the setting data of the first orbicular areas P_{A1} to P_{A4} and the second orbicular areas P_{B1} and P_{B4}, the first Z stage 41 A and the first XY stage 42A are driven by the first test surface observation position adjustment commander 52A, and the second Z stage 41B and the second XY stage 42B are driven by the second test surface observation position adjustment commander 52B, whereby the positions of the first interferometer 1A and the second interferometer 1B are automatically adjusted.
   [b] Then, the first test surface measurement light beam is applied from the first interferometer 1A to the first test surface 81A which is rotating, and for each of a plurality of rotation positions of the first test surface 81A, first test surface observation-position-specific interference fringes formed by the interference between the first object light beam reflected from the first orbicular area P_{A1} and the first test surface reference light beam from the reference plane surface 15Aa of the plane reference plate 15A (of the interference fringes observed within the first observation area QA1, straight belt form ones corresponding to an imaging area IA1 for one imaging by the first test surface one-dimensional image sensor 24A) are successively imaged by using the imaging camera 23A (first test surface one-dimensional image sensor 24A) of the interference fringe imaging system 20A while the first test surface 81 A makes one revolution, and the image data thereof is successively inputted to the first-orbicular-area-specific shape information obtainer 53A.
   [c] Likewise, the second test surface measurement light beam is applied from the second interferometer 1B to the second test surface 81B which is rotating, and for each of a plurality of rotation positions of the second test surface 81B, second test surface observation-position-specific interference fringes formed by the interference between the second object light beam reflected from the second orbicular area P_{B1} and the second test surface reference light beam from the reference plane surface 15Ba of the plane reference plate 15B (of the interference fringes observed within the second observation area Q_{B1}, straight belt form ones corresponding to an imaging area I_{B1} for one imaging by the second test surface one-dimensional image sensor 24B) are successively imaged by using the imaging camera 23B (second test surface one-dimensional image sensor 24B) of the interference fringe imaging system 20B while the second test surface 81B makes one revolution, and the image data thereof is successively inputted to the second-orbicular-area-specific shape information obtainer 53B.
   While the number of times of imaging may be arbitrarily set, in the present embodiment, for example, imaging is performed 3600 times in 0.1 second in which the test object 8C makes one revolution (once every 0.1 revolution of the test object 8C). Every time first test surface observation-position-specific interference fringes and second test surface observation-position-specific interference fringe are imaged, the rotation angle of the test object 8C at the point of time of the imaging is detected by the rotation angle detection sensor 37, and the data thereof is successively inputted to the first-orbicular-area-specific shape information obtainer 53A and the second-orbicular-area-specific shape information obtainer 53B.
(7) Then, the measurements of the other first orbicular areas P_{A2} to P_{A4} set on the first test surface 81A and the measurements of the other second orbicular areas P_{B2} to P_{B4} set on the second test surface 81B are successively performed. The procedures of the measurements are similar to those of the measurements of the first orbicular area P_{A1} and the second orbicular area P_{B1}. That is, measurement is performed by successively replacing the first orbicular area P_{A1}, the first observation area QA1 and the imaging area IA1 in the above-described procedures of [a] to [c] of (6) with the first orbicular areas P_{A2} to P_{A4}, the first observation areas QA2 to Q_{A4} and the imaging areas IA2 to I_{A4}, respectively, and successively replacing the second orbicular area P_{B1}, the second observation area Q_{B1} and the imagine area I_{B1} with the second orbicular areas P_{B2} to P_{B4}, the second observation areas Q_{B2} to Q_{B4} and the imaging areas I_{B2} to I_{B4}, respectively.
   When fringe scan measurement is performed, by using the fringe scan adapters 17A and 17B, the positions of the plane reference plates 15A and 15B in the direction of the measurement optical axes L₁ and L₂ are changed as appropriate, and the above-described procedures (6) and (7) are repeated every change.
(8) Then, the first-orbicular-area-specific shape information corresponding to each of the first orbicular areas P_{A1} to P_{A4} is obtained by the first-orbicular-area-specific shape information obtainer 53A based on the first test surface observation-position-specific interference fringes corresponding to the first orbicular areas P_{A1} to P_{A4} imaged by the imaging camera 23A (first test surface one-dimensional image sensor 24A) and the rotation angle data of the test object 8C detected by the rotation angle detection sensor 37.
(9) Likewise, the second-orbicular-area-specific shape information corresponding to each of the second orbicular areas P_{B1} to P_{B4} is obtained by the second-orbicular-area-specific shape information obtainer 53B based on the second test surface observation-position-specific interference fringes corresponding to the second orbicular areas P_{B1} to P_{B4} imaged by the imaging camera 23B (second test surface one-dimensional image sensor 24B) and the rotation angle data of the test object 8C detected by the rotation angle detection sensor 37.
(10) Then, by joining together the pieces of first-orbicular-area-specific shape information generated by the above-described procedure of (8), entire area shape information of the first test surface 81A is obtained by the first test surface shape information obtainer 54A.
(11) Likewise, by joining together the pieces of second-orbicular-area-specific shape information generated by the above-described procedure of (9), entire area shape information of the second test surface 81B is obtained by the second test surface shape information obtainer 54B. For the above-described joining of the pieces of first-orbicular-area-specific shape information and the pieces of second-orbicular-area-specific shape information, a known synthetic aperture method may be applied. Specifically, for example, when the error of the parallelism between the measurement optical axis L₁ and the rotation axis R is minute to an extent that can be ignored at the time of imaging of the interference fringes of the first orbicular areas P_{A1} to P_{A4}, by aligning the pieces of shape information of the first orbicular areas P_{A1} to P_{A4} with respect to one another, the entire area shape information of the first test surface 81 A can be obtained (in this case, it is unnecessary to set areas overlapping each other between adjoining ones of the first orbicular areas P_{A1} to P_{A4}).
   On the other hand, when the error of the parallelism between the measurement optical axis L₁ and the rotation axis R cannot be ignored, it is necessary to correct it. For example, in a case where although the measurement optical axis L₁ and the rotation axis R are parallel to each other when the first orbicular area P_{A1} is imaged, a relative angle error Δ ϕ is caused between the measurement optical axis L₁ and the rotation axis R when the first orbicular area P_{A2} is imaged, if the shape information of the first orbicular area P_{A1} and the shape information of the first orbicular area P_{A2} are aligned as they are and joined together, an unnecessary inclination is superimposed between the first orbicular areas P_{A1} and P_{A2}. Therefore, it is necessary to join them after the angle error Δ ϕ is corrected.
   This correction of the angle error Δ ϕ is performed, for example, by the following procedures: First, an area where the orbicular areas P_{A1} and P_{A2} overlap each other (hereinafter, referred to as "overlap area") are set between the first orbicular areas P_{A1} and P_{A2}. Then, the angle error Δ ϕ is obtained by comparing the shape information of the overlap area obtained by the rotation-position-specific interference fringes of the first orbicular area P_{A1} with the shape information of the overlap area obtained by the rotation-position-specific interference fringes of the first orbicular area P_{A2} (intrinsically, they should coincide with each other), and based on the obtained angle error Δ ϕ, the pieces of shape information of the partial areas corresponding to the rotation-position-specific interference fringes of the first orbicular area P_{A2} are re-aligned. Similar procedures are performed for the aperture synthesis of the other first orbicular areas P_{A3} and P_{A4} and the second orbicular areas P_{B1} to P_{B4}.
(12) Then, the thickness unevenness of the test object 8C is obtained by the thickness unevenness analysis unit 55 based on the shape information of the first test surface 81A obtained by the above-described procedure of (10) and the shape information of the second test surface 81B obtained by the above-described procedure of (11). Specifically, information on the shape difference between the first test surface 81 A and the second test surface 81B obtained when the shape information of the first test surface 81A and the shape information of the second test surface 81B are aligned so that one is situated on the back of the other on the same three-dimensional coordinate system is obtained as the test object thickness unevenness information.

In the present embodiment, since measurement is performed under a condition where the measurement optical axis L₁ of the first interferometer 1A and the measurement optical axis L₂ of the second interferometer 1B coincide with each other, the imaging area IA1 in the first observation area QA1 and the imaging area I_{B1} in the second observation area Q_{B1} always maintain a positional relationship such that one is situated on the back of the other, that is, a positional relationship such that they coincide with each other in the direction of the central axis C of the test object 8C (the same applies to the imaging areas IA2 to I_{A4} in the first observation areas QA2 to Q_{A4} and the imaging areas I_{B2} to I_{B4} in the second observation areas Q_{B2} to Q_{B4}). The imaging of the first test surface observation-position-specific interference fringes by the first test surface one-dimensional image sensor 24A and the imaging of the second test surface observation-position-specific interference fringes by the second test surface one-dimensional image sensor 24B are performed at the same time. By doing this, the following advantage is obtained with respect to the thickness unevenness measurement:
That is, there are cases where the test object 8C fluctuates in the directions of the measurement optical axes L₁ and L₂ while the test object 8C is rotating (during the measurement period) because of the mechanical accuracy of the rotation holding stage 36 or the like. Such a fluctuation error is superimposed on each of the shape information of the first test surface 81 A and the shape information of the second test surface 81B, and appears as the measurement error thereof. However, in the case of the present embodiment where areas in the positional relationship such that one is situated on the back of the other are imaged at the same time, since the fluctuation error superimposed on the shape information of the first test surface 81A and the fluctuation error superimposed on the shape information of the second test surface 81B cancel each other out when the thickness unevenness is obtained, that is, when the shape difference between the first test surface 81A and the second test surface 81B is obtained, the thickness unevenness is not affected by the fluctuation error, so that highly accurate measurement can be performed.

While the embodiments of the present invention have been described above in detail, the present invention is not limited to the above-described embodiments but modes thereof may be modified variously.

For example, in FIG. 1 or FIG. 5, a mechanism that moves the test surface 80 (test object 8) rightward and leftward in the figure may be provided so that the test surface 80 is moved with respect to the interferometer main unit 1 or 1'. Likewise, in FIG. 6, a mechanism that moves the test object 8C upward and downward in the figure may be provided so that the first test surface 81 A and the second test surface 81B are moved with respect to the first interferometer 1A and the second interferometer 1B.

While in the first and second embodiments, the four orbicular areas P₁ to P₄ are set on the test surface 80 and in the third embodiment, the four first orbicular areas P_{A1} to P_{A4} are set on the first test surface 81 A and the four second orbicular areas P_{B1} to P_{B4} are set on the second test surface 81B, an appropriate number of orbicular areas may be set depending on the relationship between the size of the test surface and the size of the observation area.

While in the above-described embodiments, the test surface 80, the first test surface 81A and the second test surface 81B are generally circular, the object of the measurement is not limited to test surfaces of such a shape. The general shape of the test surface may be any shape such as a polygon or a semicircle as long as the test surface is plane.

## Claims

1. A lightwave interference measurement device that measures a shape of a plane test surface, the device comprising:
a test surface rotation unit for rotating the test surface around a rotation axis that is set vertically to the test surface;
a interfering optical system that applies a measurement light beam to the test surface which is rotating, and combines a reflected light beam from an observation area within the test surface with a reference light beam to obtain an interfering light beam;
an observation position adjustment unit for successively changing a relative position of the test surface with respect to the measurement light beam applied to the test surface so that the observation area is successively moved over an entire area within the test surface that is rotating;
an interference fringe imaging system that successively captures the interfering light beam by a one-dimensional image sensor and successively images straight belt form observation-position-specific interference fringes formed by the interfering light beam while the observation area is moved within the test surface; and
a shape analysis unit for obtaining shape information of the test surface based on the imaged observation-position-specific interference fringes.

2. The lightwave interference measurement device according to claim 1, wherein the observation position adjustment unit changes the relative position so that the observation area is successively moved for each of a plurality of orbicular areas into which the test surface is orbicularly divided with respect to a position where the rotation axis is set,
the interference fringe imaging system images the observation-position-specific interference fringes for each of a plurality of rotation positions of the test surface in each of the plurality of orbicular areas, and
the shape analysis unit generates orbicular-area-specific interference fringes corresponding to each of the plurality of orbicular areas based on the imaged observation-position-specific interference fringes, and obtains the shape information of the test surface based on the orbicular-area-specific interference fringes.

3. The lightwave interference measurement device according to claim 1, wherein the test surface includes a first test surface and a second test surface parallel to each other and possessed by a plane-parallel test object,
the test surface rotation unit rotates the test surface around a rotation axis that is set vertically to the first test surface and the second test surface;
the interfering optical system includes: a first interfering optical system that applies a first test surface measurement light beam to the first test surface which is rotating, and combines a reflected light beam from a first observation area within the first test surface with a first test surface reference light beam to obtain a first test surface interfering light beam; and a second interfering optical system that applies a second test surface measurement light beam to the second test surface which is rotating, and combines a reflected light beam from a second observation area within the second test surface with a second test surface reference light beam to obtain a second test surface interfering light beam,
the observation position adjustment unit includes: a first observation position adjustment unit for successively changing a relative position, with respect to the first test surface, of the first test surface measurement light beam applied to the first test surface so that the first observation area is successively moved for each of a plurality of first orbicular areas set on the first test surface; and a second observation position adjustment unit for successively changing a relative position, with respect to the second test surface, of the second test surface measurement light beam applied to the second test surface so that the second observation area is successively moved for each of a plurality of second orbicular areas set on the second test surface,
the interference fringe imaging system includes: a first interference fringe imaging system that successively captures the first test surface interfering light beam by a first test surface one-dimensional image sensor and successively images first test surface observation-position-specific interference fringes formed by the first test surface interfering light beam for each of a plurality of rotation positions of the first test surface in each of the plurality of first orbicular areas; a second interference fringe imaging system that successively captures the second test surface interfering light beam by a second test surface one-dimensional image sensor and successively images second test surface observation-position-specific interference fringes formed by the second test surface interfering light beam for each of a plurality of rotation positions of the second test surface in each of the plurality of second orbicular areas, and
the shape analysis unit includes: a first test surface shape analysis unit for obtaining first-orbicular-area-specific shape information corresponding to each of the plurality of first orbicular areas based on the first test surface observation-position-specific interference fringes imaged by the first interference fringe imaging system, and obtaining entire area shape information of the first test surface by joining the pieces of first-orbicular-area-specific shape information together; and a second test surface shape analysis unit for obtaining second-orbicular-area-specific shape information corresponding to each of the plurality of second orbicular areas based on the second test surface observation-position-specific interference fringes imaged by the second interference fringe imaging system, and obtaining entire area shape information of the second test surface by joining the pieces of second-orbicular-area-specific shape information together.

4. The lightwave interference measurement device according to claim 3, wherein the first observation position adjustment unit and the second observation position adjustment unit perform an initial adjustment of making a central axis of the first test surface measurement light beam and a central axis of the second test surface measurement light beam coincide with each other, and then, changes the relative position of the first test surface measurement light beam with respect to the first test surface and changes the relative position of the second test surface measurement light beam with respect to the second test surface while maintaining the condition where the two central axes coincide with each other, and
the first interference fringe imaging system and the second interference fringe imaging system simultaneously image the first test surface observation-position-specific interference fringes and the second test surface observation-position-specific interference fringes for each of the observation positions.

5. The lightwave interference measurement device according to claim 3 or 4, further comprising a thickness unevenness analysis unit for obtaining test surface thickness unevenness information based on the entire area shape information of the first test surface and the entire area shape information of the second test surface.
